(19) Europäisches Patentamt
European Patent Office
Office européen des brevets

(11) EP 1 105 433 B1

(12) EUROPÄISCHE PATENTSCHRIFT

(45) Veröffentlichungstag und Bekanntmachung des Hinweises auf die Patenterteilung:
**27.10.2004 Patentblatt 2004/44**

(51) Int Cl.[7]: **C08G 75/23**, C08G 75/02, C08L 81/06, C08G 75/20, C08L 81/02

(21) Anmeldenummer: **99942843.6**

(22) Anmeldetag: **12.08.1999**

(86) Internationale Anmeldenummer:
**PCT/EP1999/005862**

(87) Internationale Veröffentlichungsnummer:
**WO 2000/009588 (24.02.2000 Gazette 2000/08)**

(54) **MODIFIKATION VON ENGINEERINGPOLYMEREN MIT N-BASISCHEN GRUPPEN UND MIT IONENAUSTAUSCHERGRUPPEN IN DER SEITENKETTE**

MODIFICATION OF ENGINEERING-POLYMERS WITH BASIC N GROUPS AND ION-EXCHANGE GROUPS IN THE SIDE CHAIN

MODIFICATION DE TECHNOPOLYMERES AVEC DES GROUPES N BASIQUES ET DES GROUPES ECHANGEURS D'IONS DANS LA CHAINE LATERALE

(84) Benannte Vertragsstaaten:
**AT BE CH CY DE DK ES FI FR GB GR IE IT LI LU MC NL PT SE**

(30) Priorität: **12.08.1998 DE 19836514**

(43) Veröffentlichungstag der Anmeldung:
**13.06.2001 Patentblatt 2001/24**

(73) Patentinhaber: **Universität Stuttgart**
**70199 Stuttgart (DE)**

(72) Erfinder:
- **KERRES, Jochen**
  **D-73760 Ostfildern (DE)**
- **ULLRICH, Andreas**
  **D-73734 Esslingen (DE)**
- **HÄRING, Thomas**
  **D-70619 Stuttgart (DE)**

(74) Vertreter: **Luderschmidt, Schüler & Partner GbR**
**Patentanwälte,**
**John-F.-Kennedy-Strasse 4**
**65189 Wiesbaden (DE)**

(56) Entgegenhaltungen:
**EP-A- 0 337 626**
**EP-A- 0 506 611**
**EP-A- 0 574 791**
**DE-A- 19 632 285**
**FR-A- 2 277 847**

- **S. MOULAY: "Chemical Reactions on Redox Polymer Precursors - II. Aminomethylation and Sulfonation" EUR. POLYM. J., Bd. 33, Nr. 4, 1997, Seiten 525-530, XP004080797**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

1. Gegenstand der Erfindung

Gegenstand der Erfindung sind Verfahren zur Seitenkettenmodifikation von Engineering-Arylhauptketten-Polymeren, Engineering-Arylhauptketten-Polymere, Polymermembranen und Verwendung.

2. Durch diese Erfindung zu lösendes technisches Problem

Für viele Anwendungen in der Membrantechnologie (Umkehrosmose, Nanofiltration, Mikround Ultrafiltration, Elektrodialyse, Diffusionsdialyse, Membranelektrolyse, Membranbrennstoffzellen) werden hydrophilisierte bzw. Ionenaustauschergruppen enthaltende chemisch stabile Polymere benötigt, die jedoch nur in beschränktem Ausmaße kommerziell erhältlich sind - auch heute noch werden bei den vorgenannten Anwendungen zum Teil Vinylpolymere eingesetzt, deren chemische Stabilität begrenzt ist. Außerdem ist die Bandbreite der Eigenschaften dieser kommerziellen Polymere nicht sehr groß.

3. Stand der Technik und seine Nachteile

*a) Mit basischem N modifizierte Polymere*

Mit basischem N modifizierte Polymere sind nur relativ wenige auf dem Markt, deren wichtigste im folgenden genannt werden sollen:

- **o** Poly(4-vinylpyridin), Poly(2-vinylpyridin) und Copolymere
  Diese beiden Polymere sind kommerziell erhältlich, auch als Blockcopolymere mit Polystyrol. Sie werden beispielsweise als Vorstufen für Anionenaustauschermembranen (Reiner, Ledjeff [1]; Gudematsch, Krumbholz[2] ) oder komplexiert mit Kobalt enthaltenden Schiff'schen Basen für selektive Sauerstoffpermeation eingesetzt[3] . Nachteil dieser Polymerklasse ist die tertiäre C-H-Bindung in der Polymerhauptkette, die oxidationsanfällig ist.
- **o** Polybenzimidazole
  Polybenzimidazole sind eine Klasse von Polymeren, die eine große chemische und mechanische Stabilität aufweisen. Es wurden bereits sehr viele Typen von Polybenzimidazolen (voll- und teilaromatische) synthetisiert und untersucht[4]. Kommerziell produziert werden jedoch nur wenige Typen, von denen der wichtigste das von Celanese produzierte Polymer PBI Poly[(2,2'-m-phenylen)-5,5'-bibenzimidazol] mit dem Handelsnamen CELAZOLE ist. Dieses Polymer findet u. a. Verwendung in Form von schwerentflammbaren Textilien[5] für die Feuerwehr. Nachteile dieses Polymers sind, daß es schwerlöslich in organischen Lösungsmitteln und damit schlecht verarbeitbar ist und außerdem sehr teuer ist.
- **o** Polyethylenimin
  Polyethylenimin findet in der organischen Chemie und Biochemie Verwendung als Ausfällmittel für Proteine[6]. Nachteil dieses Polymers ist, daß es aufgrund seiner großen Hydrophilie (1 N auf 2 C) wasserlöslich ist und deshalb in reiner Form keine beständigen Membranen bildet und außerdem aufgrund seiner rein aliphatischen Struktur chemisch nicht sehr beständig ist.

*b) Anionenaustauscherpolymere und -membranen*

Die kommerziellen Anionenaustauscherpolymere und -membranen lassen sich in zwei Hauptklassen einteilen:

- **o** Anionenaustauscherpolymere, die durch Reaktion von chlor[7] - oder brommethylierten[8]
  Polymeren mit tertiären Aminen hergestellt werden. Nachteil dieser Reaktion ist die Cancerogenität der Halomethylierungsreaktion und die mangelnde chemische Stabilität
  der Gruppierung Aromat-$CH_2$-$NR_3^+$.
- **o** Anionenaustauscherpolymere, die durch Alkylierung von tertiärem N, beispielsweise von Poly(vinylpyridin)[1,2,9] mit Halogenalkanen hergestellt werden[1,2]. Nachteil dieser Reaktion ist, daß nur sehr wenige kommerzielle Polymere mit tertiärem N zur Verfügung stehen (s. o.) und damit die Bandbreite der zu erzielenden

Membraneigenschaften begrenzt ist. Poly(vinylpyridin)e haben als Nachteil die begrenzte chemische Stabilität (s. o.).

*c) In der Seitengruppe sulfonierte Kationenaustauscherpolymere*

Es gibt nur sehr wenige kommerzielle Polymere und Membranen dieses Typs. Die wichtigsten beiden Vertreter seien an dieser Stelle genannt:

- **o** Nafion[10]
  Dieses Polymer besitzt eine Perfluoralkyl-Hauptkette und eine Perfluorether-Seitenkette, an deren Ende eine Sulfonsäuregruppe hängt. Dieses Polymer wird bei allen Anwendungen verwendet, die eine große chemische Membranstabilität verlangen, beispielsweise Membranbrennstoffzellen[11] . Nachteil dieses Polymers ist sein hoher Preis (800 US$ pro $m^2$) und das komplizierte Herstellungsverfahren[10].
- **o** Poly-X 200012
  Dieses Polymer besteht aus einer Poly(phenylen)-Hauptkette und einer Arylseitenkette, der exakte Namen lautet Poly(oxy-1,4-phenylen-carbonyl-1,4-phenylen). Dieses Polymer wird nach[12] nur am Ende der Seitenkette sulfoniert. Dieses Polymer weist nach Aussage von[12] in der sulfonierten Form sehr gute Protonenleitfahigkeiten auch bei Temperaturen >100°C auf, bei denen die Protonenleitfähigkeit von sulfoniertem Poly(etheretherketon) (PEEK) schon stark abfällt. Diese Eigenschaft könnte durch eine bessere Assoziation der Sulfonsäuregruppen im Poly-X 2000 hervorgerufen werden, da sich die Sulfonsäuregruppen beim Poly-X 2000 in der Seitenkette befinden - im sulfonierten PEEK befinden sich die Sulfonsäuregruppen in der Hauptkette und dürften somit wegen der Steifigkeit der PEEK-Hauptkette schlechter assoziieren. Nachteil dieses Polymers ist seine schlechtere thermische Stabilität, verglichen mit sulfoniertem PEEK[12], und die Tatsache, daß es kommerziell nicht verfügbar ist.

Diese Aufgaben werden durch die in Anspruch 1 dargelegten Maßnahmen bzw. die gemäß Anspruch 9 definierten gelöst.

Durch diese Erfindung werden mit basischem Stickstoff in der Seitengruppe modifizierte und dadurch hydrophilisierte Arylhauptkettenpolymere und -membranen zugänglich, die sehr gute thermische und mechanische Stabilitäten aufweisen. Außerdem eröffnet diese Erfindung einen Weg zu chemisch stabilen Kationen- und Anionenaustauschermembranen, die zudem dadurch, daß sich die Ionenaustauschergruppen in der Seitenkette befinden, mehr Freiheitsgrade zur Bildung von Ionenaustauschergruppen-Assoziaten aufweisen, als wenn sich die Ionenaustauschergruppen in der Polymerhauptkette befinden würden.

Die Erfindungsbeschreibung ist aus Gründen der Übersichtlichkeit in 5 Teile gegliedert:

a Mit basischem N modifizierte Polymere durch Additionsreaktion an lithiierte Polymere
b Mit basischem N modifizierte Polymere durch Substitutionsreaktion mit lithiierten Polymeren
c Anionenaustauscherpolymere und -membranen
d In der Seitengruppe sulfonierte Kationenaustauscherpolymere
e Säure-Base-Blends und Säure-Base-Blendmembranen aus den Polymeren a oder b mit beliebigen sulfonierten Polymeren oder mit den Kationenaustauscherpolymeren d

*a) Mit basischem N modifizierte Polymere durch Additionsreaktion an lithiierte Polymere*

Guiver berichtet von hydrophil in der Seitenkette modifiziertem PSU über eine Metallierungsreaktion und nachfolgende Addition ausgewählter Aldehyde bzw. Ketone unter Bildung von mit OH-Gruppen in der Seitenkette modifiziertem PSU[13] (Abb. 1). Es wurden folgende Substitutionsgrade erreicht: Benzaldehyd 1.9, Benzophenon 1.0, Aceton 0.5. Es wurde nun überraschend festgestellt, daß sich an lithiiertes PSU auch solche aromatischen Ketone und Aldehyde nach der Reaktion in Abb. 1 addieren lassen, die tertiären N enthalten. Beispiele für addierbare basische aromatische Ketone sind (Abb. 2):

- **o** 2,2'-Bipyridylketon
- **o** 4,4'-Bis(dimethylamino)-benzophenon (Michlers Keton)
- **o** 4,4'-Bis(diethylamino)-benzophenon.

Beispiele für addierbare basische aromatische Aldehyde sind (Abb. 2):

- **o** 4-Dimethylaminobenzaldehyd
- **o** 4-Diethylaminobenzaldehyd
- **o** Pyridin-2-aldehyd, Pyridin-3-aldehyd, Pyridin-4-aldehyd.

Die Substitutionsgrade bei dieser Reaktion sind abhängig von der Größe der basischen aromatischen Verbindung. So werden mit den sterisch gehinderten Ketonen 2,2'-Bipyridylketon, 4,4'-Bis(dimethylamino)-benzophenon (Michlers Keton) und 4,4'-Bis(diethylamino)-benzophenon Substitutionsgrade von etwa 1 erreicht, mit den o. g. sterisch weniger gehinderten Aldehyden Substitutionsgrade von bis zu 2.
Bei der Synthese des Additionsprodukts von 4,4'-Bis(diethylamino)-benzophenon an lithiiertes PSU wurde überraschend festgestellt, daß das substituierte Polymer gefärbt war, wobei die Farbe sich beim Stehen an der Luft mit der Zeit von hellgrün nach tiefdunkelgrün vertiefte. Dies ist vermutlich auf die Oxidation des PSU-Additionsprodukts durch Luftsauerstoff nach der in Abb. 3 gezeigten Reaktion zurückzuführen. Es entsteht vermutlich ein Triphenylmethanfarbstoff [14]. Mit dieser Reaktion wird ein Weg zu direkt kovalent an lithiierbare Polymere anbindbare chromophore Gruppen aufgezeigt. Diese chromophoren Gruppen sind positiv geladen, stellen also Anionenaustauschergruppierungen dar, da die Gegenionen, z. B. $Cl^-$, austauschbar sind. Da die Gegenionen austauschbar sind, weist das oxidierte basische Polymer Ionenleitfähigkeit auf, was experimentell bewiesen werden konnte. Da die positive Ladung mesomer über das System:

$$(H_3C)_2{=}N^+{=}C_6H_4{=}\overset{P}{\overset{|}{C}}{-}C_6H_4{-}N(CH_3)_2 \text{ (P=Polymerrückgrat)}$$

verteilt ist, sind diese Anionenaustauschergruppen sehr stabil, verglichen mit üblichen Anionenaustauschergruppen. Wenn die Oxidation des PSU-Additionsprodukts verhindert werden soll, kann die bei der Additionsreaktion entstehende Li-Alkoholat-Zwischenverbindung mit Alkylhalogeniden Alk-Hal abgefangen werden, unter Bildung des Ethers PSU-C$(R_1R_2)$-OAlk. Dadurch wird die Additionsverbindung oxidationsstabiler als die Additionsverbindung mit der freien OH-Gruppe.

*b) Mit basischem N modifizierte Polymere durch Substitutionsreaktion mit lithiierten Polymeren*

Werden niedermolekulare aromatische Carbonsäureester mit Li-organischen Verbindungen zur Reaktion gebracht, werden in den meisten Fällen die Lithiumsalze von tertiären Alkoholen erhalten (Abb. 4) [16] .
Es wurde nun überraschend festgestellt, daß sich die Umsetzung von basischen Verbindungen wie z. B. Isonicotinsäureethylester und N,N-Dimethylaminobenzoesäureethylester mit lithiiertem PSU unter den gewählten Bedingungen (niedrige Temperatur, niedrige Polymerkonzentration in der Lösung des lithiierten PSU, Überschuß der basischen Verbindung) auf der Stufe des Ketons anhalten läßt (Abb. 5).
Auf diese Weise lassen sich aus lithiierbaren Polymeren solche Polymere herstellen, die mit N-basischen Gruppen (tertiärer N wie Pyridyl- oder Dialkylaminogruppe) in der aromatischen Seitenkette modifiziert sind. Die Seitenkette ist aufgrund ihrer Aromatizität und aufgrund der Anbindung an die Polymerhauptkette über eine Carbonylfunktion sehr oxidationsstabil . Die synthetisierten, tertiären N enthaltenden Polymere können in einem weiteren Schritt durch N-Quarternisierung in oxidationsstabile Anionenaustauscherpolymere umgewandelt werden (siehe c)).

*c) Anionenaustauscherpolymere und -membranen*

Die o. g. in der aromatischen Seitenkette mit basischem tertiärem N modifizierten Polymere können nun mittels üblicher Verfahren[15] zu Anionenaustauscherpolymeren und -membranen umgesetzt werden, wobei auch vernetzte Anionenaustauschermembranen nach folgender Methode zugänglich sind: man stellt eine Lösung des mit tertiärem N in der Seitengruppe modifizierten lithiierbaren Polymers in einem dipolar-aprotischen Lösungsmittel (NMP, DMAc, DMF, DMSO, Sulfolan etc.) her, setzt der Lösung Halogenalkane und Halogendialkane im gewünschten Molverhältnis zu, um die gewünschte Vernetzungsdichte zu generieren, und dampft das Lösungsmittel bei erhöhter Temperatur ab. Während der Membranbildung werden die tertiären N zu Anionenaustauschergruppen quarternisiert, wobei die Dihalogenalkane gleichzeitig ein kovalentes Netzwerk in der Membran aufbauen.

*d) In der Seitengruppe sulfonierte Kationenaustauscherpolymere*

Auf der Basis der in b) vorgestellten Reaktion (Reaktion eines aromatischen Carbonsäureesters mit lithiiertem Arylpolymer unter Anbindung einer aromatischen Seitengruppe an das Arylhauptkettenpolymer über eine Carbonylgruppe) sind in der Seitengruppe sulfonierte Arylhauptkettenpolymere zugänglich, vorausgesetzt, die aromatische Seitengruppe ist leichter elektrophil sulfonierbar als die Polymerhauptkette. Um dies zu erreichen, muß der in der Seitengruppe befindliche Aromat die größte Elektronendichte aller aromatischen Ringe des Polymers aufweisen. Eine Reaktion zum Erhalt eines in der aromatischen Seitenkette sulfonierten Arylhauptkettenpolymers ist in Abb. 6 dargestellt. Bei dem in der aromatischen Seitenkette sulfonierten PSU Udel® weist der Aromat am Ende der aromatischen Seitenkette die größte Elektronendichte des gesamten Moleküls auf. Aus diesem Grunde wird dieser Aromat sulfoniert, und zwar in der p-Stellung zur Etherbrücke, da die elektronisch auch mögliche o-Stellung zur Etherbrücke sterisch gehindert ist.

*e) Säure-Base-Blends und Säure-Base-Blendmembranen aus den Polymeren*

*a oder b mit beliebigen sulfonierten Polymeren oder mit den Kationenaustauscherpolymeren d*

Die neu erhaltenen, in den Unterpunkten a, b und d aufgeführten Polymere sowie beliebige sulfonierte Polymere können zu neuen Säure-Base-Blends und Säure-Base-Blendmembranen kombiniert werden. Die Lage der sauren und basischen Gruppen am Ende der aromatischen Seitengruppe öffnet einen Weg zu besserer Assoziation der Ionenaustauschergruppen in den Blends, da die Position der sauren und basischen Gruppen am Ende der Seitengruppe sterisch weniger gehindert ist, als wenn sich diese Gruppen in der Polymerhauptkette befänden. Eine bessere Assoziationsmöglichkeit der sauren und basischen Gruppen kann zu einer Erhöhung der lokalen Konzentration an Ionenaustauschergruppen in der Polymermatrix und damit zu einer höheren Protonenleitfähigkeit bereits bei niedrigeren Konzentrationen an Ionenaustauschergruppen als bei in der Hauptkette mit sauren und basischen Gruppen modifizierten steifen Arylhauptkettenpolymeren. Die Morphologie des perfluorierten Ionenaustauscherpolymers Nafion, bei dem die Sulfosäuregruppen wegen des extrem hydrophoben perfluorierten Backbone stark assoziiert (geclustert) sind [10], kann somit mit solchen neuen Säure-Base-Blends "nachgebaut" werden. Die Säure-Base-Blends können zusätzlich zur ionischen Vernetzung durch die Polysalzbildung:

$$P\text{-}SO_3H + P'\text{-}NR_2 \rightarrow P\text{-}SO_3^{-}\,{}^{+}R_2N\text{-}P'$$

kovalent vernetzt werden, indem der Mischung des sauren mit dem basischen Polymer im Lösungsmittel Dihalogenalkane zugesetzt werden, die während der Membranbildung unter Quartemisierung des tertiären N vernetzen:

$$P'\text{-}NR_2 + Hal\text{-}(CH_2)_x\text{-}Hal + R_2N\text{-}P' \rightarrow P'\text{-}NR_2^{+}\text{-}(CH_2)_x\text{-}R_2N^{+}\text{-}P'$$

## 4. Ausführungsbeispiele

### 4.1 Reaktion von N,N-Dimethylaminobenzaldehyd mit litiiertem PSU

*Ansatz:*

11, 05 g PSf Udel P 1800 (0,025 mol) getrocknet
500 ml THF wasserfrei
5 ml n-BuLi 10 N (0,05 mol)
10 g 4-Dimethylaminobenzaldehyd (0,13 mol), gelöst in 20 ml THF

*Durchführung:*

Man füllt unter Schutzgas das THF in das Reaktionsgefäß. Danach wird in das Reaktionsgefäß unter Rühren und kräftigem Spülen mit Argon das getrocknete Polymer eingetragen. Nachdem das Polymer aufgelöst ist, wird es auf -65 °C heruntergekühlt, unter kräftigem Argonstrom. Nun titriert man die Polymerlösung mit n-BuLi aus, bis eine leichte Gelb/Orangefärbung anzeigt, daß die Reaktionsmischung nunmehr wasserfrei ist. Danach wird innerhalb von 10 min das 10 N n-BuLi eingespritzt. Man läßt 30 min lang rühren. Danach spritzt man die Lösung von 4-Dimethylaminobenzaldehyd in THF ein. Man läßt so lange rühren, bis die Reaktions-mischung entfärbt ist. Maximale Wartezeit bei -65°C ist 1 Stunde. Danach nimmt man das Aceton-Kältebad weg und ersetzt es durch ein Eisbad. Man läßt auf 0 °C hochwärmen und läßt 1 Stunde bei 0 °C rühren. Danach fällt man die Reaktionsmischung in 2 l iso-Propanol aus. Man trocknet bei 50°C zuerst im Membranpumpenvakuum, dann im Ölpumpenvakuum. Danach wird das Polymer gemahlen, in 500 ml Methanol aufgeschlämmt, abfiltriert und nochmals bei 50°C im Vakuum getrocknet. Die chemische Strukturformel des gebildeten modifizierten PSU ist in Abb. 7 gezeigt.

Die Elementaranalyse und das $^{1}$H-NMR-Spektrum des Polymers ergeben einen Substitutionsgrad von annähernd 2 Gruppen pro PSU-Wiederholungseinheit.

4.2 Reaktion von Bis(N,N-Diethylamino)benzophenon mit lithiiertem PSU

*Ansatz:*

11,05 g PSU Udel P 1800 (0,025 mol) getrocknet
600 ml THF wasserfrei
3 ml n-BuLi 10 N (0,03 mol)
25 g 4,4'-Bis-Diethylaminobenzophenon, gelöst in 50 ml THF (0,077 mol)

*Durchführung:*

Man füllt unter Schutzgas das THF in das Reaktionsgefäß. Danach wird in das Reaktionsgefäß unter Rühren und kräftigem Spülen mit Argon das getrocknete Polymer eingetragen. Nachdem das Polymer aufgelöst ist, wird es auf -30 °C heruntergekühlt, unter kräftigem Argonstrom. Nun titriert man die Polymerlösung mit n-BuLi aus, bis eine leichte Gelb/Orangefärbung anzeigt, daß die Reaktionsmischung nunmehr wasserfrei ist. Danach wird innerhalb von 10 min das 10 N n-BuLi eingespritzt. Man läßt 50 min lang rühren. Danach spritzt man die Lösung von 4,4'-Bis-Diethylaminobenzophenon in THF ein. Man läßt so lange rühren, bis die Reaktionsmischung entfärbt ist, höchstens 24 h. Danach wird eine Mischung von 20 ml Isopropanol mit 2 ml Wasser in die Reaktionslösung eingespritzt, und danach läßt man auf Raumtemperatur hochwärmen. Man fällt das Polymer in 2 l Isopropanol aus, filtriert ab und wäscht mit Isopropanol. Danach wird das Polymer in 300 ml i-PrOH gerührt. Danach wird es erneut abfiltriert, nochmals in i-PrOH aufgeschlämmt, gerührt und abfiltriert. Danach gibt man das Polymer in 5 l Wasser und läßt rühren. Nach der Abfiltration wird es nochmals in 5 l Wasser gegeben und erneut gerührt. Danach wird es ein weiteres Mal abfiltriert, bis pH 7 gewaschen, und danach bei 80 °C getrocknet. Die chemische Strukturformel des gebildeten modifizierten PSU ist in Abb. 8 gezeigt.
Die Elementaranalyse und das $^{1}$H-NMR-Spektrum des Polymers ergeben einen Substitutionsgrad von annähernd 1 Gruppe pro PSU-Wiederholungseinheit. Das Polymer ist grün gefärbt, ein Umstand, der auf partielle Bildung von Triphenylmethyl-Chromophoren durch Oxidation unter Abspaltung der OH-Gruppe zurückgeführt werden kann (siehe Abb. 3). Wenn man das Polymer bei erhöhter Temperatur in verdünnter Säure stehen läßt, vertieft sich die Farbe zu einem Schwarz-Grün. Mit $^{1}$H- und $^{13}$C-NMR konnte nachgewiesen werden, daß die in Abb. 3 gezeigte Reaktion des Reaktionsprodukts 6.2 tatsächlich stattfindet: das $^{1}$H-und das $^{13}$C-Signal des OH-Protons, dessen Lage durch H/D-Austausch als bei einer chemischen Verschiebung von 5,8 ppm ($^{1}$H-NMR) bzw. bei einer chemischen Verschiebung von 83 ppm ($^{13}$C-NMR) liegend identifiztiert werden konnte, war nach der Lagerung des Reaktionsprodukts 6.2 in verdünnter Säure unter Luftzutritt bei 60°C fast vollständig verschwunden.
Die Bildung der chromophoren Gruppe kann durch Veretherung der OH-Gruppe via Reaktion des PSU-Li-Alkoholats mit beispielsweise Methyljodid verhindert werden (Abb. 9).
Das oxidierte Reaktionsprodukt 6.2 weist Ionenleitfähigkeit auf, was auf die in Abschnitt 5 a) dargelegten Ursachen zurückzuführen ist. Dazu wurden Filme des oxidierten Polymers mit und ohne HCl-Nachbehandlung mittels Impedanzspektroskopie in 0,5 N HCl vermessen.

Ergebnisse:

| Polymerfilm | Filmdicke [μm] | $R_a$ [Ω*cm$^2$] | $R_{sp}$ [Ω*cm] |
|---|---|---|---|
| 6.2 + Nachbehandlung | 55 | 7,6 | 500 |
| 6.2 ohne Nachbehandlung | 155 | 4,6 | 840 |

4.3 Reaktion von 2,2'-Dipyridylketon mit lithiiertem PSU

*Ansatz:*

6,88 g PSU Udel P 1800 (0,01556 mol) getrocknet
400 ml THF wasserfrei
1,7 ml n-BuLi 10 N (0,017 mol)
3,89 g Di(2-pyridyl)-keton (0,021 mol), gelöst in 20 ml THF

*Durchführung:*

Man füllt unter Schutzgas das THF in das Reaktionsgefäß. Danach wird in das Reaktionsgefäß unter Rühren und kräftigem Spülen mit Argon das getrocknete Polymer eingetragen. Nachdem das Polymer aufgelöst ist, wird es auf -30 °C heruntergekühlt, unter kräftigem Argonstrom. Nun titriert man die Polymerlösung mit n-BuLi aus, bis eine leichte Gelb/ Orangefärbung anzeigt, daß die Reaktionsmischung nunmehr wasserfrei ist. Danach wird innerhalb von 10 min das 10 N n-BuLi eingespritzt. Man läßt 30 min lang rühren. Danach spritzt man die Lösung von Di(2-pyridyl)-keton in THF ein.
Man läßt so lange rühren, bis die Reaktionsmischung entfärbt ist, höchstens 48 h bei -30°C. Danach spritzt man eine Mischung von 10 ml Isopropanol mit 1 ml Wasser in die Reaktionslösung ein und läßt auf Raumtemperatur hochwärmen. Man fällt das Polymer in 2 l Isopropanol aus, filtriert ab und wäscht mit Isopropanol und Methanol.
Das ausgefällte Polymer wird erneut abfiltriert, getrocknet und in 100 ml MeOH gerührt. Danach wird es erneut abfiltriert, nochmals in MeOH aufgeschlämmt, gerührt, abfiltriert und und bei 80 °C getrocknet. Die Strukturformel des Reaktionsprodukts ist in Abb. 10 aufgeführt.
Der Substitutionsgrad des modifizierten PSU an Dipyridylgruppen, bestimmt via Elementaranalyse, beträgt etwa 0,85 pro PSU-Wiederholungseinheit.

4.4 Reaktion von Isonicotinsäureethylester mit lithiiertem PSU

*Ansatz:*

8,84 g PSU Udel P 1800 (0,02 mol) getrocknet
300 ml THF wasserfrei
4 ml n-BuLi 10 N (0,04 mol)
10,5 ml Isonicotinsäureethylester(0,07 mol)

*Durchführung:*

Man füllt unter Schutzgas das THF in das Reaktionsgefäß. Danach wird in das Reaktionsgefäß unter Rühren und kräftigem Spülen mit Argon das getrocknete Polymer eingetragen. Nachdem das Polymer aufgelöst ist, wird es auf -30 °C heruntergekühlt, unter kräftigem Argonstrom. Nun titriert man die Polymerlösung mit n-BuLi aus, bis eine leichte Gelb/Orangefärbung anzeigt, daß die Reaktionsmischung nunmehr wasserfrei ist. Danach wird das 10 N n-BuLi eingespritzt. Man läßt 50 min lang rühren. Danach spritzt man den Isonicotinsäureethylester ein. Man läßt so lange rühren, bis die Reaktionsmischung entfärbt ist, höchstens 24 h bei -30°C. Danach spritzt man eine Mischung von 20 ml Isopropanol mit 2 ml Wasser in die Reaktionslösung ein und läßt auf Raumtemperatur hochwärmen. Man fällt das Polymer in 2 l Isopropanol aus, filtriert ab und wäscht mit Isopropanol. Danach wird das Polymer in 300 ml i-PrOH gerührt. Danach wird es erneut abfiltriert, nochmals in i-PrOH aufgeschlämmt, gerührt und abfiltriert. Danach gibt man das Polymer in 5 l Wasser und läßt rühren. Nach der Abfiltration wird es nochmals in 5 l Wasser gegeben und erneut gerührt. Danach wird es ein weiteres Mal abfiltriert und danach bei 80 °C getrocknet. Das Reaktionsprodukt ist in Abb. 11 gezeigt.
Der Substitutionsgrad des modifizierten PSU mit 4-Pyridylcarbonylgruppen beträgt 1,65, bestimmt via $^1$H-NMR und Elementaranalyse.

4.5 Reaktion von N,N-Dimethylaminobenzoesäureethylester mit lithiiertem PSU

*Ansatz:*

11,05 g PSU Udel P 1800 (0,025 mol) getrocknet
600 ml THF wasserfrei
5 ml n-BuLi 10 N (0,05 mol)
48,32 g N,N-Dimethylaminobenzoesäureethylester, gelöst in 100 ml THF (0,25 mol)

*Durchführung:*

Man füllt unter Schutzgas das THF in das Reaktionsgefäß. Danach wird in das Reaktionsgefäß unter Rühren und kräftigem Spülen mit Argon das getrocknete Polymer eingetragen. Nachdem das Polymer aufgelöst ist, wird es auf -60 °C heruntergekühlt, unter kräftigem Argonstrom. Nun titriert man die Polymerlösung mit n-BuLi aus, bis eine leichte Gelb/ Orangefärbung anzeigt, daß die Reaktionsmischung nunmehr wasserfrei ist. Danach wird innerhalb von

10 min das 10 N n-BuLi eingespritzt. Man läßt 50 min lang rühren. Danach spritzt man die Lösung von N,N-Dimethylaminobenzoesäureethylester in THF ein. Man läßt 10 min rühren. Danach spritzt man eine Mischung von 20 ml Isopropanol mit 2 ml Wasser in die Reaktionslösung ein und läßt auf Raumtemperatur hochwärmen. Man fällt das Polymer in 2 l Isopropanol aus, filtriert ab und wäscht mit Isopropanol und Methanol. Das ausgefällte Polymer wird erneut abfiltriert, getrocknet und in 100 ml MeOH gerührt. Danach wird es erneut abfiltriert, nochmals in MeOH aufgeschlämmt, gerührt, abfiltriert und und bei 80 °C getrocknet. Das Ergebnis der Elementaranalyse zeigt einen Substitutionsgrad von 0,75 p-N,N-Dimethylamino-phenylcarbonylgruppen pro PSU-Wiederholungseinheit an. Wie weitere Versuche gezeigt haben, kann der Substitutionsgrad durch eine längere Reaktionszeit des lithiierten PSU mit N,N-Dimethylaminobenzoesäureethylester erhöht werden. Das Reaktionsprodukt dieser Reaktion (mit einer p-N,N-Dimethylaminophenylcarbonylgruppe pro PSU-Wiederholungseinheit) ist in Abb. 12 aufgeführt.

4.6 Säure-Base-Blendmembran aus Reaktionsprodukt 6.2 mit sulfoniertem PSU

4 g sulfoniertes PSU Udel® in der $SO_3Li$-Form werden in 25 g N-Methylpyrrolidinon gelöst. Danach werden der Lösung 1 g des Reaktionsprodukts aus Reaktion 6.2 (1,1 Gruppen per PSU-Wiederholungseinheit) zugefügt und bis zur Auflösung gerührt. Danach wird die tiefdunkelgrüne Lösung filtriert, entgast und in einem dünnen Film auf eine Glasplatte aufgetragen. Danach wird das Lösungsmittel bei 120°C abgedämpft. Danach legt man die Glasplatte in ein Bad mit vollentsaltztem Wasser ein, worauf sich die gebildete Polymermembran von der Glasplatte ablöst. Danach wird die Membran bei 70°C zuerst in 10%iger Schwefelsäure und dann in vollentsalztem Wasser nachgbehandelt. Danach wird die Membran charakterisiert.

| *Charakterisierungsergebnisse:* | |
|---|---|
| Ionenaustauscherkapazität | 1,35 meq $SO_3H$/g |
| Quellung ($H^+$-Form, RT) | 33.14% |
| Spez. Widerstand ($H^+$-Form, RT) | 27.6 Ωcm |

4.7 Säure-Base-Blendmembran aus Reaktionsprodukt 6.4 mit sulfoniertem PSU

4 g sulfoniertes PSU Udel® in der $SO_3Li$-Form werden in 25 g N-Methylpyrrolidinon gelöst. Danach werden der Lösung 1 g des Reaktionsprodukts aus Reaktion 6.2 (1,65 Gruppen per PSU-Wiederholungseinheit) zugefügt und bis zur Auflösung gerührt. Danach wird die Lösung filtriert, entgast und in einem dünnen Film auf eine Glasplatte aufgetragen. Danach wird das Lösungsmittel bei 120°C abgedampft. Danach legt man die Glasplatte in ein Bad mit vollentsaltztem Wasser ein, worauf sich die gebildete Polymermembran von der Glasplatte ablöst. Danach wird die Membran bei 70°C zuerst in 10%iger Schwefelsäure und dann in vollentsalztem Wasser nachgbehandelt. Danach wird die Membran charakterisiert.

| *Charakterisierungsergebnisse:* | |
|---|---|
| Ionenaustauscherkapazität | 1,09 meq $SO_3H$/g |
| Quellung ($H^+$-Form, RT) | 24.6% |
| Spez. Widerstand ($H^+$-Form, RT) | 21.2 Ωcm |

4.8 Säure-Base-Blendmembran aus Reaktionsprodukt 6.5 mit sulfoniertem PSU

4 g sulfoniertes PSU Udel® in der $SO_3Li$-Form werden in 25 g N-Methylpymolidinon gelöst. Danach werden der Lösung 1 g des Reaktionsprodukts aus Reaktion 6.2 (0,75 Gruppen per PSU-Wiederholungseinheit) zugefügt und bis zur Auflösung gerührt. Danach wird die Lösung filtriert, entgast und in einem dünnen Film auf eine Glasplatte aufgetragen. Danach wird das Lösungsmittel bei 120°C abgedampft. Danach legt man die Glasplatte in ein Bad mit vollentsaltztem Wasser ein, worauf sich die gebildete Polymermembran von der Glasplatte ablöst. Danach wird die Membran bei 70°C zuerst in 10%iger Schwefelsäure und dann in vollentsalztem Wasser nachgbehandelt. Danach wird die Membran charakterisiert.

| *Charakterisierungsergebnisse:* | |
|---|---|
| Ionenaustauscherkapazität | 1,11 meq $SO_3H$/g |
| Quellung ($H^+$-Form, RT) | 23.5% |
| Spez. Widerstand ($H^+$-Form, RT) | 17.6 Ωcm |

5. Vorteile der Erfindung

Die Erfindung beinhaltet neue Polymere und Membranen, die wegen der aromatischen Seitenkette chemisch stabil sind und die gezielt weiter modifiziert werden können:

- Durch Quartemisierung des basischen N mit Alkylhalogeniden können neue Anionenaustauscherpolymere und -membranen erzeugt werden, die wegen der direkten Anbindung des basischen N an die aromatische Seitenkette chemisch stabiler sind als kommerzielle Anionenaustauscherpolymere und -membranen. Durch die Möglichkeit der Verwendung von Dihalogenalkanen können die Anionenaustauscherpolymermembranen außerdem gleichzeitig kovalent vernetzt werden.
- Die Synthese von Polymeren mit aromatischen Seitengruppen, die in der aromatischen Seitengruppe sulfoniert sind, kann die Assoziation der Sulfonsäuregruppen in der Polymermatrix verbessern und damit zu höheren Protonenleitfähigkeiten bereits bei niedrigeren Ionenaustauschergruppenkonzentrationen führen.
- Die erfindungsgemäßen Säure-Base-Blends und Säure-Base-Blendmembranen können eine bessere Ionenaustauschergruppenassaziation aufweisen als Säure-Base-Blends und Säure-Base-Blendmembranen, bei denen sich die sauren und basischen Gruppen in der Polymerhauptkette befinden, da die Seitengruppen beweglicher sind als die Polymerhauptkette. Diese Blends und Blendmembranen können neben der ionischen Vernetzung aufgrund der Polysalzbildung durch eine kovalente Vernetzung weiter hinsichtlich Quellung und damit mechanischer Stabilität stabilisiert werden.

6. Schlagworte

Arylhauptkettenpolymere
Modifikation mit basischen tertiären N enthaltenden Seitengruppen
Anionenaustauscherpolymere
Anionenaustauscherpolymermembranen
Kationenaustauscherpolymere
Kationenaustauscherpolymermembranen
basische tertiären N enthaltende aromatische Carbonsäure-Ester
Carbonsäure-Halogenide
basische tertiären N enthaltende aromatische Ketone und Aldehyde
Säure-Base-Polymerblends
Säure-Base-Polymerblendmembranen
metalliertes Arylhauptkettenpolymer
Membranbrennstoffzellen
Membranen
Membranverfahren

10. Literatur

1 Anion Exchange Membranes Consisting of Poly(vinylpyridine) and Poly(vinylbenzyl chloride) for Cr/Fe Redox Batteries
A. Reiner, K. Ledjeff
Journal of Membrane Science 36, 535-540 (1988)

2 Development of an Anion-Exchange Membrane with Increased Permeability for Organic
Acids of High Molecular Weight
W. Gudernatsch, Ch. Krumbholz, H. Strathmann
Desalination 79, 249-260 (1990)

3 Membranes of poly(styrene-block-butadiene-block-styrene- graft-2- vinylpyridine) complexed with cobalt-containing schiff's bases for oxygen permeation
G.-H. Hsiue, J.-M. Yang
Die Makromolekulare Chemie 192,2687-2699 (1991)

4 E.-W. Choe, D. D. Choe, Polybenzimidazoles (Overview), in: Polymeric Materials Encyclopedia, Vol. 8,

5619-5638, CRC Press, New York, 1996

5 Properties and Applications of Celanese PBI-Polybenzimidazole Fiber
D. R. Coffin, G. A. Serad, H. L. Hicks, R. T. Montgomery
Textile Research Journal 52(7), 466-72 (1982)

6 Polyelectrolyte precipitation of .beta.-galactosidase fusions containing poly-aspartic acid tails
J. Zhao, C. F. Ford, C. E. Glatz, M. A. Rougvie, S. M. Gendel
J. Biotechnol. 14(3-4), 273-83 (1990)

7 Novel Ion Exchange Membranes Based on an Aromatic Polysulfone
P. Zschocke, D. Quellmalz
Journal of Membrane Science 22, 325-332 (1985)

8 Polysulfon-Based Interpolymer Anion Exchange Membrane
A. Warshawsky, O. Kedem
Journal of Membrane Science 53, 37-44 (1990)

9 I. M. Khan, Vinylpyridine Polymers, in: Encyclopedia of Polymer Science and Engineering, Vol. 17,567-577, Wiley-Interscience, New York, 1996

10 Perfluorinated Ion-Exchange Polymers and Their Use in Research and Industry, W. G. Grot
Macromolecular Symposia, 82, 161-172 (1994)

11 Die reversible Membran-Brennstoffzelle
Ledjeff, K.; Heinzel, A.; Mahlendorf, F.; Peinecke, V.
Dechema-Monographien Band 128, VCH Verlagsgesellschaft, 103-118 (1993)

12 Proton-conducting polymers derived from poly(etheretherketone) and poly(4-phenoxybenzoyl-1,4-phenylene)
T. Kobayashi, M. Rikukawa, K. Sanui, N. Ogata,
Solid State Ionics 106 (1998), 219-225

13 Aromatic Polysulfones Containing Functional Groups by Synthesis and Chemical Modification
M. D. Guiver
Dissertation, Carletown University, Ottawa-Ontario, Canada (1987)

14 Beyer/Walter, Lehrbuch der Organischen Chemie, 19. Aufl., S. Hirzel Verlag Stuttgart, 569f, 1981

15 J. Goerdeler, Herstellung von quarternären Ammoniumverbindungen, Houben-Weyl, Methoden der organischen Chemie Band XI/2 Stickstoffverbindungen II, Georg Thieme Verlag, Stuttgart, S. 591 f. (1958)

16 U. Schöllkopf, Methoden zur Herstellung und Umwandlung von lithium-organischen Verbindungen, in: Houben-Weyl, Methoden der Organischen Chemie, Band XIII/1 Metallorganische Verbindungen, Georg Thieme Verlag, S. 185f. (1970)

**Patentansprüche**

**1.** Verfahren zur Seitenkettenmodifikation von mit metallorganischen Verbindungen deprotonierbaren Engineering-Arylhauptketten-Polymeren mit arylhaltigen N-basischen Gruppen,
wobei man
metallierte Polymere P-Me, wobei das Polymer P die Reste
$R_1$:

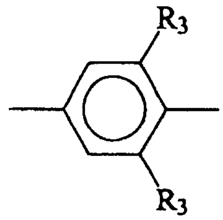

und/oder

$R_2$:

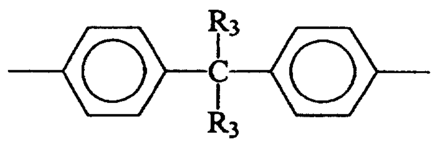

enthält,

worin $R_3$ = H, Alkyl oder Aryl ist, die über

$R_4$: —O— ,

$R_5$:

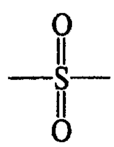

und/oder

$R_6$: —S— verknüpft sind, und

Me für Na oder Li steht,

mit tertiäre basische N-Gruppen enthaltenden aromatischen Ketonen oder Aldehyden der allgemeinen Formel

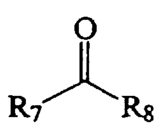

,

worin $R_7$ eine aromatische Gruppe, die basischen tertiären N enthält, und $R_8$ H, eine Alkyl- oder Arylgruppe darstellt,

umsetzt, und

das als Zwischenverbindung entstehende Me-Alkoholat in einem weiteren Schritt mit Wasser protoniert oder mit Halogenalkanen verethert.

2. Verfahren nach Anspruch 1, **dadurch gekennzeichnet, dass** die tertiäre basische N Gruppen, die die aromatischen Ketone oder Aldehyde enthalten, heterocyclische aromatische Verbindungen sind.

3. Verfahren nach Anspruch 2, **dadurch gekennzeichnet, dass** die heterocyclischen aromatischen Verbindungen Pyridin, Pyrimidin, Triazin, Imidazol, Pyrazol, Triazol, Thiazol oder Oxazol sind.

4. Verfahren zur Seitenkettenmodifikation von Engineering-Arylhauptketten-Polymeren mit arylhaltigen N-basischen

Gruppen,
wobei man
metallierte Polymere P-Me, wobei Polymer P die Reste
$R_1$:

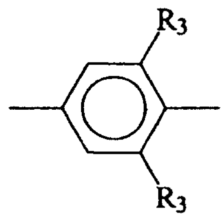

und/oder
$R_2$:

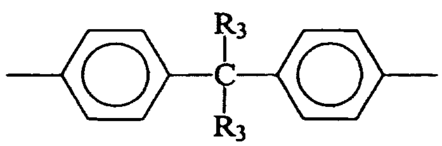

enthält,
worin $R_3$ = H, Alkyl oder Aryl ist, die über
$R_4$: —O— ,
$R_5$:

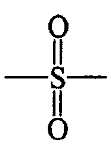

und/oder
$R_6$: —S— verknüpft sind, und
Me für Na oder Li steht,
mit aromatischen, tertiäre basische N-Gruppen enthaltenden Carbonsäureestern, Ar-COOR', worin Ar ein aromatischer Rest darstellt, der tertiären basischen N trägt und R' einen Alkyl- oder Arylrest darstellt, umsetzt.

5. Verfahren nach einem der vorhergehenden Ansprüche, **dadurch gekennzeichnet, dass** man als Polymer P ein Polyethersulfon einsetzt.

6. Verfahren zur Quarternisierung von tertiärem N in Polymeren, **dadurch gekennzeichnet, dass** man die gemäß einem Verfahren der Ansprüche 1 bis 5 erhaltenen Polymere mit Halogenmonoalkanen umsetzt.

7. Verfahren zur Quarternisierung von tertiärem N in Polymeren und zur Vernetzung, **dadurch gekennzeichnet, dass** man die gemäß einem Verfahren der Ansprüche 1 bis 5 erhaltenen Polymere mit Gemischen von Halogenmono- und Halogendialkanen umsetzt.

8. Verfahren zur Herstellung von Anionenaustauscherpolymeren, **dadurch gekennzeichnet, dass** die gemäß Anspruch 1 erhaltenen Polymere, die durch Reaktion 4,4'-Bis(diethylamino)-benzophenon erhalten wurden, durch Aufschlämmung/Auflösung in verdünnter Mineralsäure HX unter Luftzutritt oder durch Reaktion mit einem anderen Oxidationsmittel in saurer Phase zu Polymeren oxidiert werden.

9. Polymere erhältlich nach einem der vorhergehenden Ansprüche.

**10.** Polymermembranen, dadurch erhältlich, dass man die Polymere gemäß Anspruch 9 in einem dipolaren aprotischen Lösungsmittel löst, die Polymerlösung auf einer Unterlage als dünnen Film aufbringt und anschließend das Lösungsmittel verdampft.

**11.** Säure-Base-Polymerblendmembranen, dadurch erhältlich, dass man Polymere gemäß Anspruch 9 mit Sulfonat-, Phosphonat- oder Carboxylatgruppen enthaltenden Polymeren in Säure- oder Salzform in einem dipolaren, aprotischen Lösungsmittel mischt und die Lösung der Polymere auf einer Unterlage als dünnen Film aufträgt und anschließend das Lösungsmittel verdampft.

**12.** Polymermembranen nach Anspruch 10 oder nach Säure-Base-Polymerblendmembranen nach Anspruch 11, **dadurch gekennzeichnet, dass** man als Unterlage eine Glasplatte, eine Gewebe oder ein Vlies einsetzt.

**13.** Verwendung der Polymermembranen nach Anspruch 10 oder nach Säure-Base-Polymerblendmembranen nach Anspruch 11 in Membranprozessen, insbesondere in Polymerelektrolytmembranbrennstoffzellen, Direktmethanolbrennstoffzellen, Diffusionsdialyse und Elektrodialyse.

**14.** Verwendung der Polymermembranen nach Anspruch 10 oder nach Säure-Base-Polymerblendmembranen nach Anspruch 11 in der Dialyse, Umkehrosmose, Nanofiltration, Gaspermeation, Pervaporation oder Perstraktion.

## Claims

**1.** A process for side-chain modification, with aryl-containing N-basic groups, of aryl-main-chain engineering polymers which can be deprotonated with organometallic compounds,
wherein
metallated polymers P-Me, wherein the polymer P contains the radicals
$R_1$:

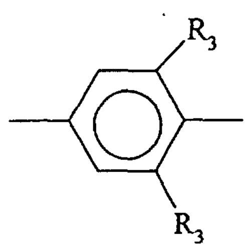

and/or
$R_2$:

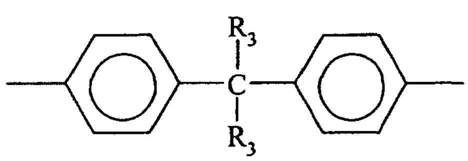

,

wherein $R_3$ is H, alkyl or aryl, which are linked by way of
$R_4$: —O— ,
$R_5$:

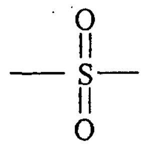

and/or

$R_6$: —S— , and

Me denotes Na or Li,

are reacted with tertiary basic N-group-containing aromatic ketones or aldehydes of the general formula

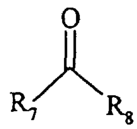 ,

wherein $R_7$ denotes an aromatic group containing basic tertiary N, and $R_8$ denotes H or an alkyl or aryl group, and

the Me-alcoholate formed as intermediate compound is, in a further step, protonated with water or etherified with a haloalkane.

2. A process according to claim 1, **characterised in that** the tertiary basic N groups contained in the aromatic ketones or aldehydes are heterocyclic aromatic compounds.

3. A process according to claim 2, **characterised in that** the heterocyclic aromatic compounds are pyridine, pyrimidine, triazine, imidazole, pyrazole, triazole, thiazole or oxazole.

4. A process for side-chain modification, with aryl-containing N-basic groups, of aryl-main-chain engineering polymers,

wherein

metallated polymers P-Me, wherein polymer P contains the radicals

$R_1$:

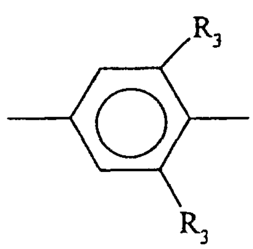

and/or

$R_2$:

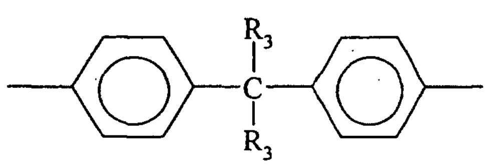 ,

wherein $R_3$ is H, alkyl or aryl, which are linked by way of

$R_4$: —O— ,
$R_5$:

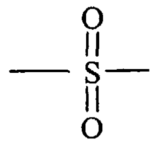

and/or
$R_6$: —S— , and
Me denotes Na or Li,
are reacted with tertiary basic N-group-containing aromatic carboxylic acid esters Ar-COOR', wherein Ar denotes an aromatic radical carrying tertiary basic N and R' denotes an alkyl or aryl radical.

5. A process according to one of the preceding claims, **characterised in that** a polyether sulfone is used as polymer P.

6. A process for the quatemisation of tertiary N in polymers, **characterised in that** the polymers obtained according to a process of claims 1 to 5 are reacted with monohaloalkanes.

7. A process for the quatemisation of tertiary N in polymers and for cross-linking, **characterised in that** the polymers obtained according to a process of claims 1 to 5 are reacted with mixtures of monohalo- and dihalo-alkanes.

8. A process for the preparation of anion exchange polymers, **characterised in that** the polymers obtained according to claim 1, which have been obtained by reaction of 4,4'-bis(diethylamino)benzophenone, are oxidised by suspension/dissolution in dilute mineral acid HX with air access or by reaction with another oxidant in an acid phase to form polymers.

9. Polymers obtainable according to one of the preceding claims.

10. Polymer membranes obtainable by dissolving the polymers according to claim 9 in a dipolar aprotic solvent, applying the polymer solution as a thin film to a substrate and then evaporating off the solvent.

11. Acid-base polymer blend membranes obtainable by mixing polymers according to claim 9 with sulfonate, phosphonate or carboxylate group-containing polymers in acid or salt form in a dipolar aprotic solvent and applying the solution of the polymers as a thin film to a substrate and then evaporating off the solvent.

12. Polymer membranes according to claim 10 or acid-base polymer blend membranes according to claim 11, **characterised in that** a glass plate or a woven or non-woven material is used as substrate.

13. Use of polymer membranes according to claim 10 or acid-base polymer blend membranes according to claim 11 in membrane processes, especially in polymer electrolyte membrane fuel cells, direct methanol fuel cells, diffusion dialysis and electrodialysis.

14. Use of polymer membranes according to claim 10 or acid-base polymer blend membranes according to claim 11 in dialysis, reverse osmosis, nanofiltration, gas permeation, pervaporation or perstraction.

## Revendications

1. Procédé de modification dans la chaîne latérale de technopolymères avec une chaîne principale aryle déprotonisable avec des composés métallo-organiques avec des groupes N basiques contenant de l'aryle,
dans lequel,
on convertit des polymères métallisés P-Me, le polymère P contenant les radicaux
$R_1$ :

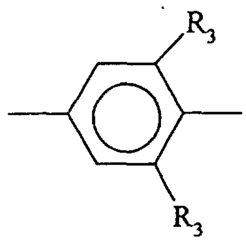

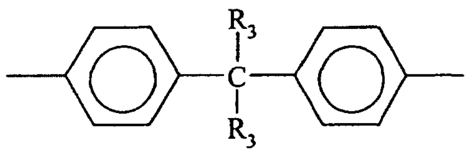

,

où $R_3$ représente H, un groupe alkyle ou un groupe aryle, qui sont reliés au moyen de
$R_4$ : —O— ,
$R_5$ :

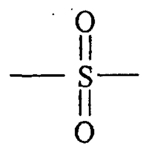

et/ou
$R_6$ : —S— , et

Me représente Na ou Li,

avec des cétones ou des aldéhydes aromatiques contenant des groupes N basiques tertiaires de formule générale

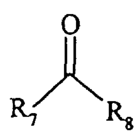

,

dans laquelle $R_7$ représente un groupe aromatique qui contient un N tertiaire basique, et $R_8$ représente H, un groupe alkyle ou un groupe aryle,

et

l'alcoolate Me apparaissant comme composé intermédiaire est protoné dans une autre étape avec de l'eau ou estérifié avec des halogénoalcanes.

2. Procédé selon la revendication 1, **caractérisé en ce que** les groupes N basiques tertiaires, qui contiennent les cétones ou aldéhydes aromatiques, sont des composés aromatiques hétérocycliques.

3. Procédé selon la revendication 2, **caractérisé en ce que** les composés aromatiques hétérocycliques sont la pyridine, la pyrimidine, la triazine, l'imidazole, le pyrazole, le triazole, le thiazole ou l'oxazole.

4. Procédé pour la modification dans la chaîne latérale de technopolymères de chaîne principale aryle avec des groupes basiques N contenant de l'aryle,

dans lequel

on convertit des polymères métallisés P-Me, le polymère P contenant les radicaux

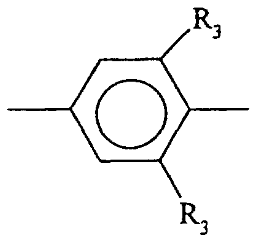

et/ou

où $R_3$ représente H, un groupe alkyle ou un groupe aryle, qui sont reliés au moyen de

$R_4$ : —O— ,

$R_5$ :

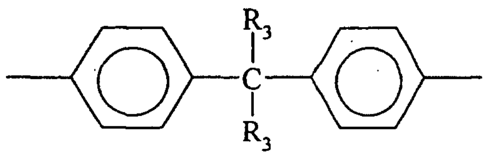

,

et/ou

$R_6$ : —S— , et

Me représente Na ou Li,

avec des esters d'acide carbonique contenant des groupes N basiques tertiaires aromatiques, l'Ar-COOR', où Ar représente un radical aromatique, qui porte le N basique tertiaire et R' représente un radical alkyle ou un radical aryle.

5. Procédé selon l'une quelconque des revendications précédentes, **caractérisé en ce que** l'on utilise comme polymère P un polyéther sulfone.

6. Procédé pour la quaternisation du N tertiaire dans des polymères, **caractérisé en ce que** l'on convertit les polymères obtenus selon le procédé des revendications 1 à 5 avec des halogénomonoalcanes.

7. Procédé pour la quaternisation des N tertiaires dans des polymères et pour la réticulation, **caractérisé en ce que** les polymères obtenus selon le procédé des revendications 1 à 5 sont convertis avec des mélanges d'halogénomonoalcane et d'halogénodialcane.

8. Procédé pour la fabrication d'un polymère échangeur d'anions, **caractérisé en ce que** les polymères obtenus selon la revendication 1, qui ont été obtenus par réaction avec le 4,4'-bis(diéthylamino)benzophénone, sont oxydés en des polymères par suspension / dissolution dans un acide minéral dilué HX sous arrivée d'air ou par réaction avec un autre agent d'oxydation en phase acide.

9. Polymères obtenus selon l'une quelconque des revendications précédentes.

10. Membranes en polymères, pouvant être obtenues en ce que l'on dissout les polymères selon la revendication 9 dans un solvant aprotique dipolaire, en ce que l'on applique la solution des polymères sur un substrat sous la forme d'un film mince puis en ce que l'on évapore le solvant.

11. Membranes en mélanges de polymères de base sous forme acide, obtenues en ce que l'on mélange des polymères selon la revendication 9 avec des polymères contenant des groupes sulfonate, phosphate ou carboxylate sous forme d'acide ou de sel dans un solvant aprotique dipolaire et en ce que l'on applique la solution de polymères sur un substrat sous la forme d'un film mince et en ce que l'on évapore ensuite le solvant.

12. Membranes en polymères selon la revendication 10 ou membranes en mélanges de polymères de base sous forme acide selon la revendication 11, **caractérisées en ce que** l'on utilise comme support une plaque de verre,

un tissu ou un non-tissé.

**13.** Utilisation des membranes en polymères selon la revendication 10 ou de membranes en mélanges de polymères de base sous forme acide selon la revendication 11 dans des procédés à membranes, notamment dans des piles à combustible à membrane électrolyte polymère, des piles à combustible à utilisation directe de méthanol, de dialyse et d'électrodialyse.

**14.** Utilisation de membranes en polymères selon la revendication 10 ou de membranes en mélange de polymères de base sous forme acide selon la revendication 11 dans la dialyse, l'osmose inverse, la nanofiltration, la perméation gazeuse, la pervaporation et la perstraction.

# ZEICHNUNGEN

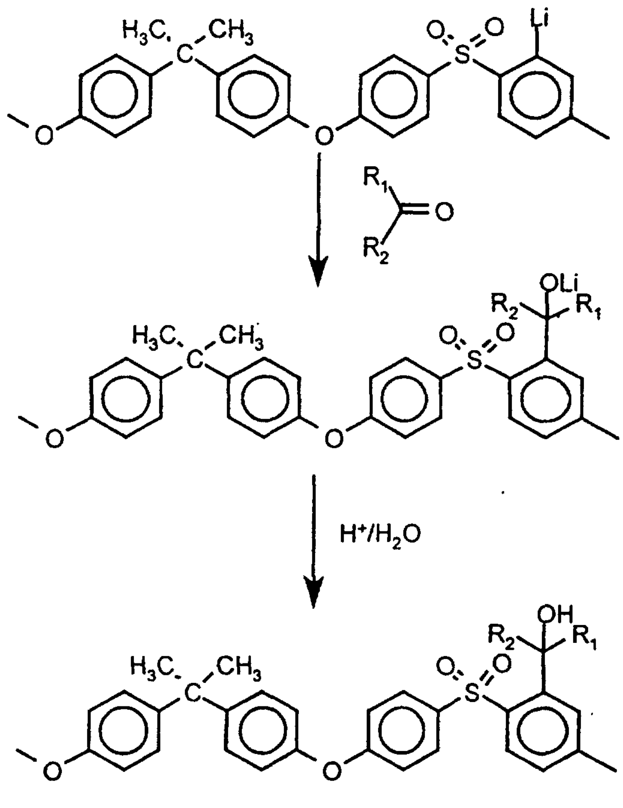


Abb. 1: Reaktion von lithiiertem PSU mit Benzaldehyd, Benzophenon und Aceton[13]
$R_1$=H, $R_2$=Phenyl: Benzaldehyd; $R_1$=$R_2$=Phenyl: Benzophenon; $R_1$=$R_2$=$CH_3$: Aceton

Di-2-pyridylketon

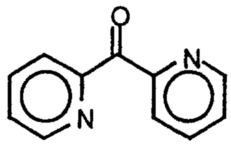

4,4'-Bis(dimethylamino)-benzophenon (Michlers Keton), 4,4'-Bis(diethylamino)-benzophenon:

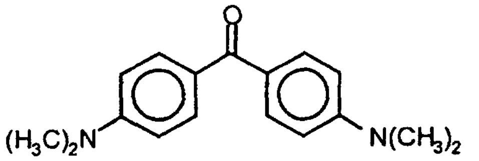

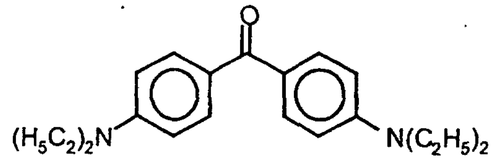

Pyridin-2-aldehyd, Pyridin-3-aldehyd, Pyridin-4-aldehyd

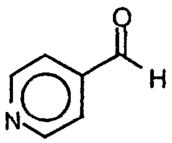

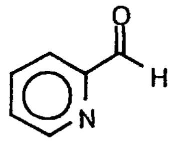

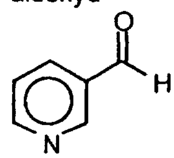

4-Dimethylaminobenzaldehyd, 4-Diethylaminobenzaldehyd

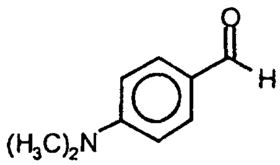

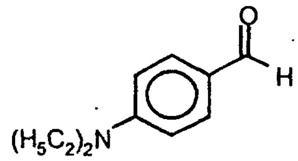

Abb. 2: Nach Reaktion in Abb. 1 an lithiiertes PSU addierbare Aldehyde und Ketone

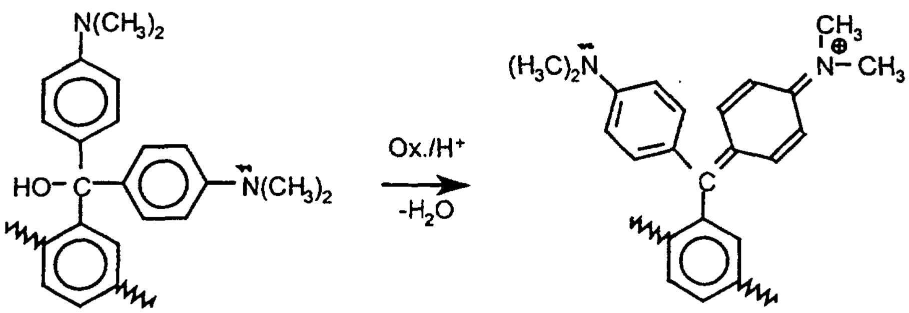


Abb. 3: Vermutete Oxidationsreaktion des Addukts von 4,4'-Bis(diethylamino)-benzophenon an lithiiertes PSU unter Bildung einer chromophoren Gruppe am PSU

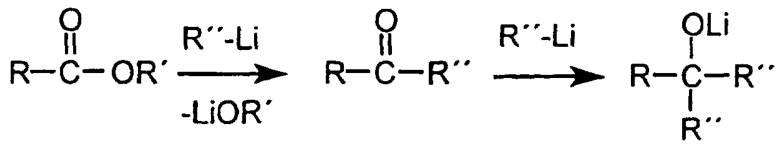


Abb. 4: Normale Reaktion von Li-organischen Verbindungen mit Carbonsäureestern[16]

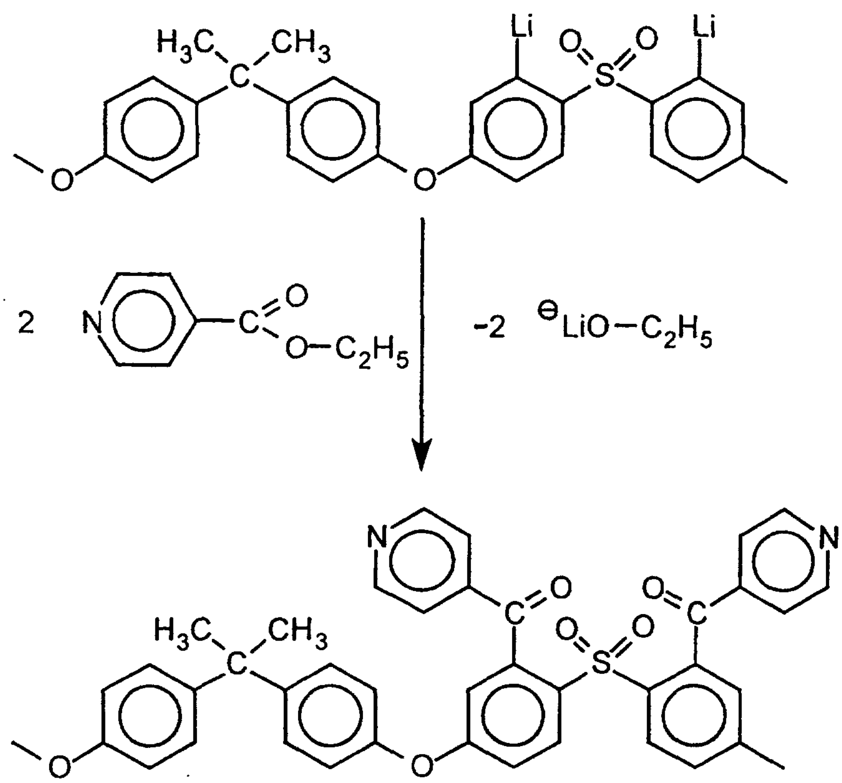


Abb. 5: Reaktion von lithiiertem PSU mit Isonicotinsäureethylester

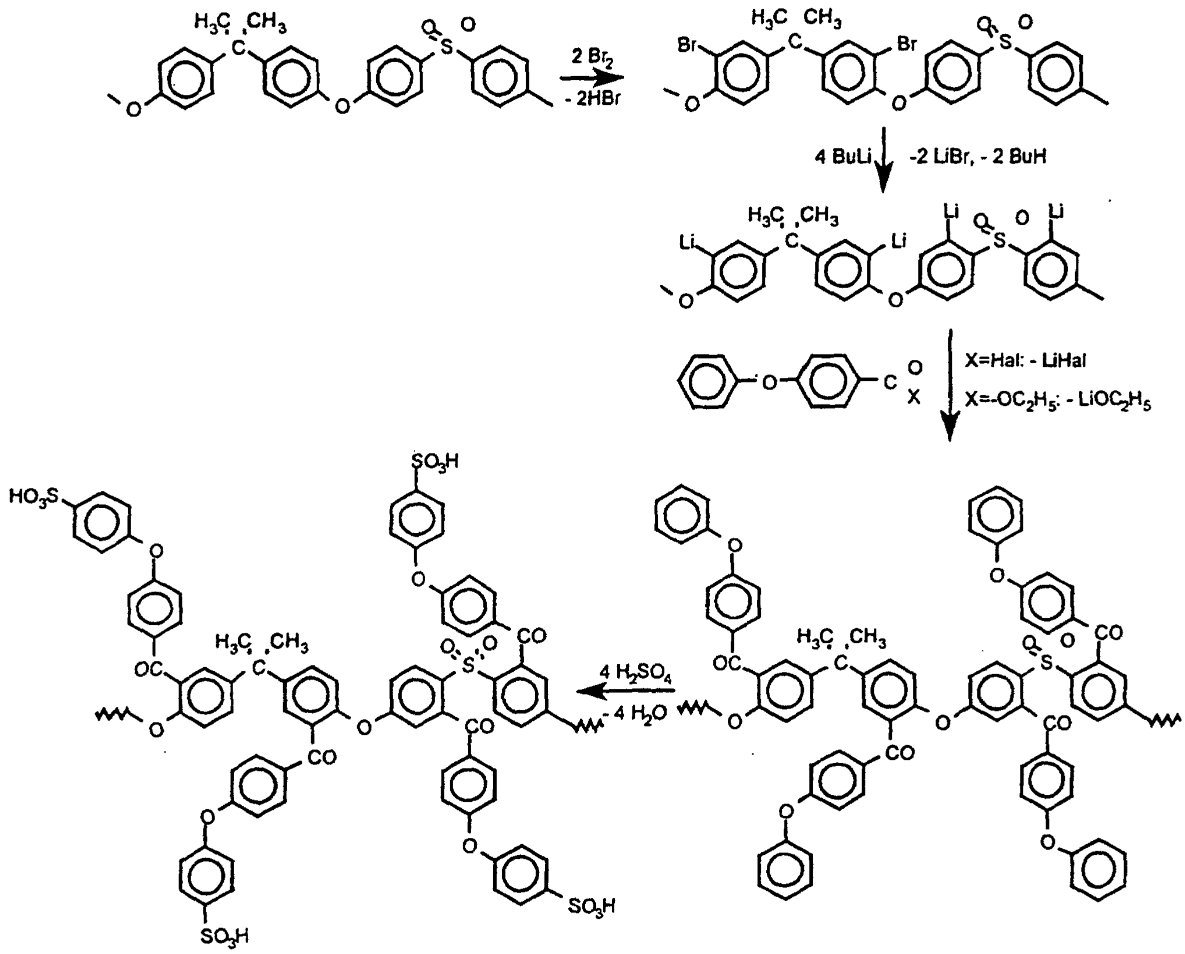


Abb. 6 Reaktionsfolge zum Erhalt von in der aromatischen Seitenkette sulfoniertem Polysulfon PSU Udel®

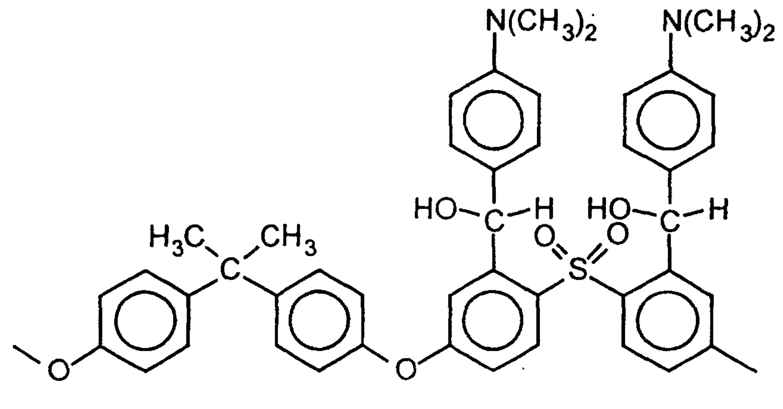

Abb. 7: Reaktionsprodukt von lithiiertem PSU mit N,N-Dimethylaminobenzaldehyd

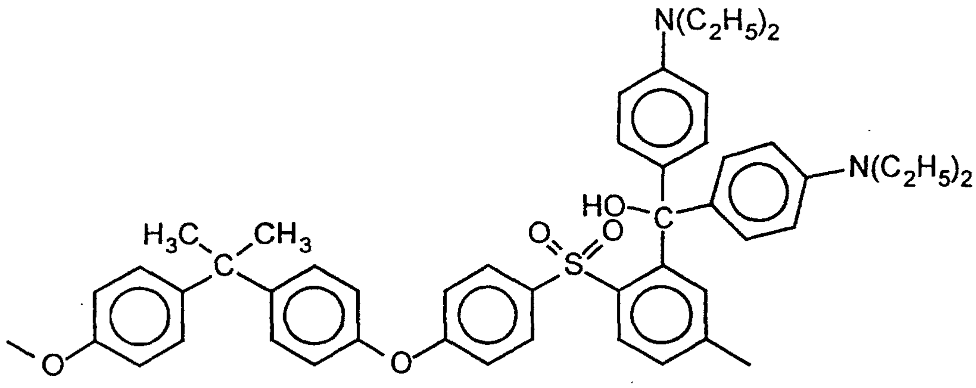

Abb. 8: Reaktionsprodukt von lithiiertem PSU mit Bis-(N,N-Diethylamino)benzophenon

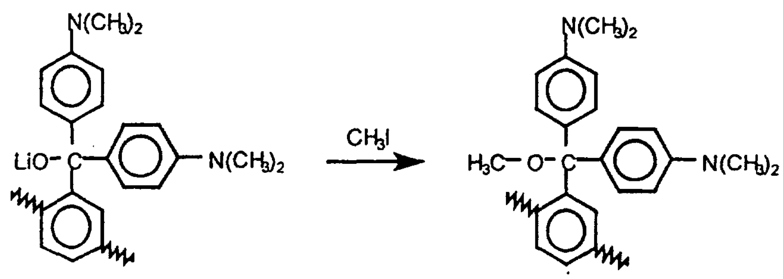


Abb. 9: Veretherung des PSU-Li-alkoholats

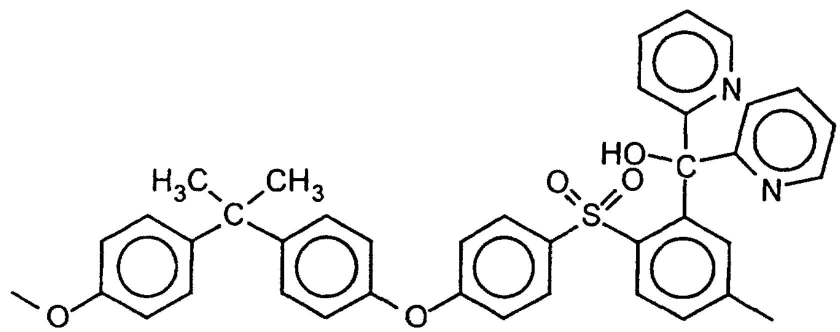

Abb. 10: Strukturformel des Reaktionsprodukts von lithiiertem PSU mit Di(2-pyridyl)keton

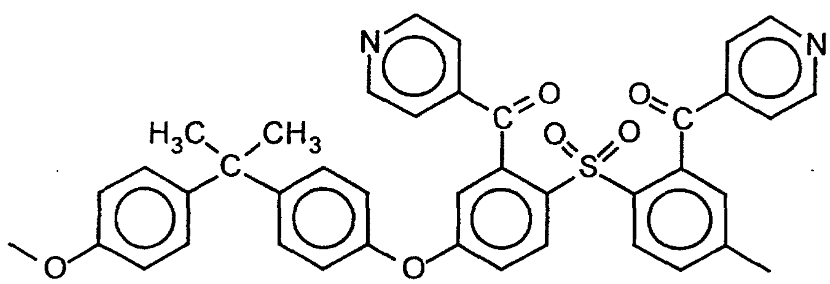

Abb. 11: Produkt der Reaktion von lithiiertem PSU mit Isonicotinsäureethylester

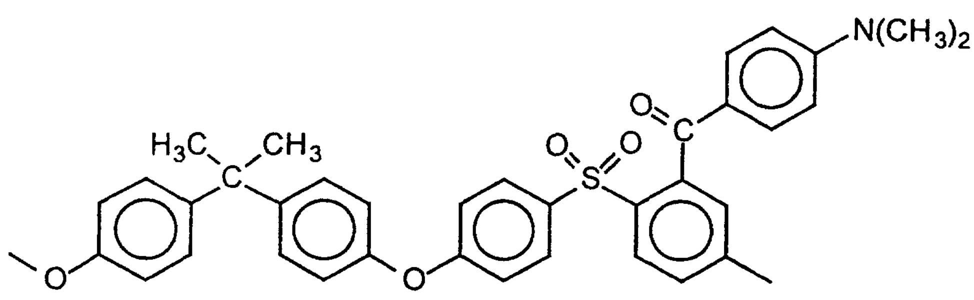

Abb. 12: Produkt der Reaktion von lithiiertem PSU mit N,N-Dimethylamino-benzoesäureethylester

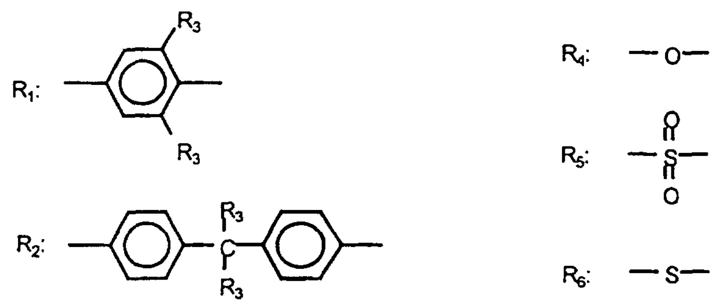

$R_3$=H, Alkyl, Aryl

Abb. 13: Gruppen von für das erfindungsgemäße Verfahren verwendbaren Arylhauptkettenpolymeren

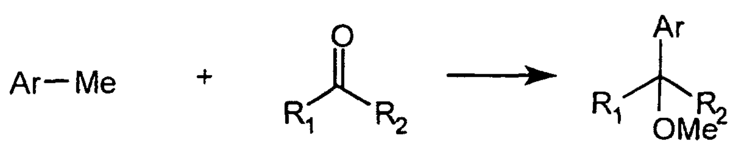

Abb. 14: Erfindungsgemäße Reaktion von metallierten Polymeren mit aromatischen, tertiären basischen Stickstoff enthaltenden Ketonen oder Aldehyden (Ar=Arylhauptkettenpolymer, sh. Abb. 13; Me=Li, Na; $R_1$=aromatische Gruppe, die basischen tertiären N enthält ; $R_2$=H oder Alkyl- oder Arylgruppe, die zusätzlich noch tertiären basischen N enthalten kann